Europäisches Patentamt

European Patent Office

Office européen des brevets

(19)

(11) **EP 0 533 543 B1**

(12) **FASCICULE DE BREVET EUROPEEN**

(45) Date de publication et mention
de la délivrance du brevet:
**24.04.1996 Bulletin 1996/17**

(51) Int Cl.6: **G02B 26/02**

(21) Numéro de dépôt: **92402507.5**

(22) Date de dépôt: **14.09.1992**

(54) **Commutateur optique et procédé de fabrication de ce commutateur**

Optischer Schalter und Verfahren zu seiner Herstellung

Optical commutator and method for its fabrication

(84) Etats contractants désignés:
**CH DE GB IT LI**

(30) Priorité: **17.09.1991 FR 9111420**

(43) Date de publication de la demande:
**24.03.1993 Bulletin 1993/12**

(73) Titulaire: **COMMISSARIAT A L'ENERGIE ATOMIQUE**
**F-75015 Paris (FR)**

(72) Inventeur: **Delapierre, Gilles**
**F-38180 Seyssins (FR)**

(74) Mandataire: **Dubois-Chabert, Guy et al**
**c/o BREVATOME**
**25, rue de Ponthieu**
**F-75008 Paris (FR)**

(56) Documents cités:
**WO-A-87/02518**          **DE-A- 2 939 539**

- **IBM TECHNICAL DISCLOSURE BULLETIN, vol. 32, no. 10B, Mars 1990, Armont NY, US, pp. 172-174; "Integrated fiber optical switching element"**
- **IBM TECHNICAL DISCLOSURE BULLETIN, vol. 29, no. 6, Novembre 1986, New York, US, pp. 2799-2800; "Photoconductive switch"**

**Description**

La présente invention concerne un commutateur optique ainsi qu'un procédé de fabrication de ce commutateur.

Elle s'applique notamment dans le domaine des télécommunications optiques.

Les fibres optiques, qui permettent de transporter un grand nombre d'informations en milieu électromagnétique perturbé, ont contribué au développement important de ce domaine.

Néanmoins, ce développement est quelque peu freiné par la difficulté de réaliser des commutateurs optiques performants.

Un commutateur optique a pour fonction de permettre la liaison entre une fibre optique quelconque, prise parmi N fibres optiques, et une fibre optique quelconque, prise parmi M fibres optiques, N étant un nombre entier au moins égal à 2 et M étant un nombre entier au moins égal à 1.

Les N fibres optiques sont par exemple des fibres émettrices, les M fibres optiques étant alors des fibres réceptrices ou, inversement, les N fibres sont réceptrices et les M fibres sont émettrices.

La commutation optique, qui n'a pas nécessairement à être très rapide, peut être réalisée à l'aide de systèmes mécaniques.

Les systèmes mécaniques connus dans ce domaine de la commutation optique présentent l'inconvénient d'être lourds, encombrants et coûteux, et ce d'autant plus que les tolérances de positionnement fibre à fibre sont très serrées.

Pour remédier à cet inconvénient, des systèmes de commutation optique ont été réalisés par les mêmes techniques de microlithographie et de couches minces que dans le domaine de la microélectronique.

Les systèmes connus ainsi réalisés, utilisent tous, pour leur fonctionnement, la flexion des fibres optiques ou des pièces qui supportent ces fibres, en vue d'aligner une fibre par rapport à une autre fibre.

Ces systèmes connus, qui utilisent des techniques de microlithographie et de couches minces, présentent des inconvénients :

- ils sont sensibles aux accélérations, et
- ils ne permettent pas le maintien de la position dans laquelle une fibre est alignée par rapport à une autre fibre, en l'absence d'alimentation électrique.

Par ailleurs, la flexion des fibres optiques peut induire des perturbations gênantes.

Certes, la sensibilité aux accélérations peut être diminuée en raidissant les structures flexibles mais ceci conduit à augmenter la puissance des "moteurs" qui font fléchir les fibres et donc à augmenter les tensions ou les courants électriques de commande ainsi que la taille de ces moteurs.

Malheureusement, cette augmentation de la taille des moteurs accroît à nouveau la sensibilité aux accélérations.

La présente invention a pour but de remédier aux inconvénients précédents.

Pour ce faire, dans la présente invention,

- on utilise des guides de lumière intermédiaires, ce qui évite d'avoir à déplacer les fibres optiques émettrices et les fibres optiques réceptrices,
- on place ces guides de lumière intermédiaires sur une pièce tournante, ou rotor, dont le centre de gravité est sur l'axe de rotation de cette pièce tournante, ce qui élimine la sensibilité aux accélérations, le fait d'utiliser une telle pièce tournante (qui est désolidarisée du reste du commutateur) donnant un système à position stable, en l'absence d'alimentation électrique, et
- on utilise un système de "vernier", afin de pouvoir commuter une fibre optique prise parmi N fibres optiques vers une seule fibre optique, avec un seul mouvement de rotation.

En outre, dans la présente invention, on utilise une technologie de fabrication intégrée qui permet d'obtenir une bonne compatibilité entre les guides de lumière, la pièce tournante et les moyens de rotation de cette pièce tournante.

De plus, une technologie de fabrication intégrée permet de réaliser un grand nombre de commutateurs optiques élémentaires, conformes à la présente invention, sur un même substrat semiconducteur.

Un commutateur optique selon le préambule de la présente revendication 1 est divulgué dans IBM Technical Disclosure Bulletin, Vol. 32 No. 10B, Mars 1990, pp. 172-174.

De façon précise, la présente invention a tout d'abord pour objet un commutateur optique, formé sur un support, ce commutateur optique comprenant :

- un premier ensemble de N guides de lumière d'entrée-sortie, N étant un nombre entier au moins égal à 2,
- un deuxième ensemble de M guides de lumière d'entrée-sortie, M étant un nombre entier au moins égal à 1,
- une pièce tournante qui est mobile en rotation par rapport au support et qui porte des guides de lumière intermédiaires, le centre de gravité de la pièce tournante munie des guides de lumière intermédiaires étant sur l'axe de rotation de cette pièce tournante, ladite pièce tournante étant apte à occuper, par rotation, des positions dans chacune desquelles l'un des guides de lumière intermédiaires relie l'un des N guides de lumière d'entrée-sortie à l'un des M guides de lumière d'entrée-sortie, et
- des moyens de rotation de la pièce tournante, aptes à faire occuper à celle-ci l'une quelconque des positions, caractérisé en ce que le support comprend un premier substrat et un deuxième substrat plans qui sont superposés et sont fixés l'un à l'autre, le premier substrat comprend au moins une partie tournante libérée de celui-ci, le deuxième substrat comprend au moins une partie tournante libérée de celui-ci, ces deux parties tournantes étant superposées et fixées l'une à l'autre et formant la pièce tournante libérée de celui-ci, et l'un des deux substrats et la partie tournante correspondante portent respectivement les guides de lumière d'entrée-sortie et les guides de lumière intermédiaires.

Selon un mode de réalisation particulier du commutateur objet de la présente invention, le nombre N est égal à 2, le nombre M est égal à 1, le nombre de guides de lumière intermédiaires est égal à 2, le nombre de positions étant ainsi égal à 2, et les moyens de rotation de la pièce tournante comprennent :

- un premier groupe de deux électrodes fixes et espacées l'une de l'autre,
- un deuxième groupe de deux électrodes fixes, espacées l'une de l'autre et respectivement opposées aux deux électrodes du premier groupe par rapport à la pièce tournante,
- deux électrodes mobiles, rigidement solidaires de la pièce tournante, électriquement reliées l'une à l'autre et respectivement placées entre les deux électrodes du premier groupe et entre les deux électrodes du deuxième groupe,
de sorte qu'en appliquant une tension électrique entre deux électrodes opposées, appartenant respectivement aux premier et deuxième groupes, on peut faire passer la pièce tournante d'une position dans laquelle les électrodes mobiles sont en contact avec les deux autres électrodes opposées, à l'autre position.

Selon un autre mode de réalisation particulier, le nombre N est supérieur à 2, le nombre M est égal à 1, le nombre de guides de lumière intermédiaires est égal à N, le nombre de positions étant ainsi égal à N, la pièce tournante comprend, à sa périphérie, N encoches et les moyens de rotation comprennent :

- des dents qui sont respectivement associées aux encoches et aptes à s'engrener dans celles-ci, et
- des moyens d'actionnement qui sont respectivement associés aux dents, chaque moyen d'actionnement étant prévu pour engrener la dent correspondante dans l'encoche correspondante, amenant ainsi la pièce tournante à l'une des positions, et pour désengrener cette dent de cette encoche.

Dans une réalisation particulière correspondant à cet autre mode de réalisation particulier, chaque moyen d'actionnement comprend :

- un levier à une extrémité duquel est montée la dent correspondante, et
- une électrode allongée et déformable, fixée en ses deux extrémités et apte à déplacer, en se déformant, l'autre extrémité du levier, causant ainsi l'engrènement de la dent correspondante dans l'encoche correspondante,

et les moyens de rotation comprennent en outre des moyens de création d'un champ magnétique perpendiculaire aux électrodes allongées, de sorte qu'en appliquant une tension électrique entre les extrémités de l'une de ces électrodes allongées, celle-ci subit une déformation.

La présente invention concerne également un procédé de fabrication du commutateur optique objet de la présente invention.

Ce procédé est caractérisé en ce qu'il comprend les étapes suivantes :

- fabrication des N guides de lumière d'entrée-sortie, des M guides de lumière d'entrée-sortie et des guides de lumière intermédiaires sur l'une des faces d'un premier substrat semiconducteur, cette face étant appelée face-avant du premier substrat,
- formation d'un évident dans ce premier substrat, à partir de l'autre face de celui'-ci, appelée face-arrière du premier substrat, cet évidement délimitant une première partie de la pièce tournante, les guides de lumière intermédiaires se trouvant sur cette première partie,
- formation d'un évident torique dans un deuxième substrat semiconducteur, à partir d'une face de celui-ci qui est appelée face-arrière du deuxième substrat, cet évidement torique délimitant une deuxième partie de la pièce tournante,
- fixation de l'autre face du deuxième substrat, qui est appelée face-avant du deuxième substrat, à la face-arrière du premier substrat et de façon à fixer la première partie de la pièce tournante à la deuxième partie de celle-ci, et
- libération de la pièce tournante du reste des premier et deuxième substrats.

Selon un mode de mise en oeuvre particulier du procédé objet de la présente invention, les substrats sont en silicium et sont fixés l'un à l'autre au moyen d'un verre soudable au silicium.

Enfin, dans une réalisation particulière de ce procédé, les substrats sont en silicium, on forme dans le deuxième substrat, à partir de la face supérieure de celui-ci, une couche enterrée d'oxyde de silicium, en forme de couronne, dont l'axe correspond à l'axe de rotation de la pièce tournante, on réalise une gravure circulaire, autour de cet axe, à partir de la face supérieure du deuxième substrat, jusqu'à cette couche enterrée, et, après fixation des substrats l'un à l'autre, cette couche enterrée est éliminée à travers l'évidement torique, ce dernier étant formé dans le deuxième substrat jusqu'à cette couche enterrée, ce qui libère la partie correspondante de la pièce tournante.

La présente invention sera mieux comprise à la lecture de la description d'exemples de réalisation donnés ci-après à titre purement indicatif et nullement limitatif, en faisant référence aux dessins annexés sur lesquels :

- la figure 1 est une vue schématique et partielle d'un commutateur optique conforme à la présente invention,
- la figure 2 est la coupe A-A de la figure 1,
- les figures 3, 4 et 5 illustrent schématiquement diverses étapes d'un procédé de fabrication du commutateur optique représenté sur la figure 1, la partie b de la figure 5 étant la coupe B-B de la figure 1,
- la figure 6 est une vue schématique et partielle d'un autre commutateur optique conforme à la présente invention, et
- la figure 7 est une vue de dessus schématique et partielle d'un commutateur optique conforme à la présente invention, comportant une pluralité de commutateurs optiques élémentaires également conformes à la présente invention.

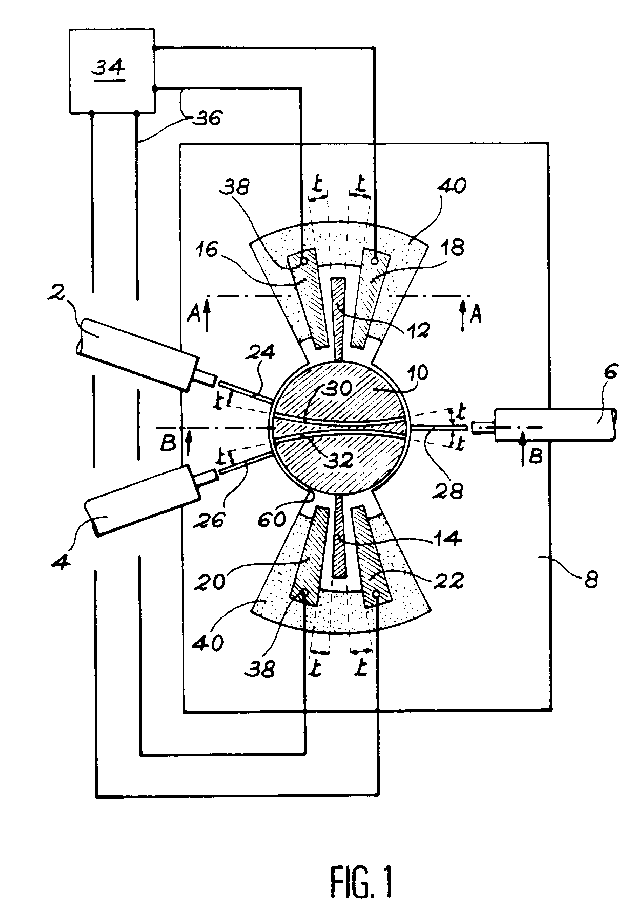

Sur la figure 1, on a représenté schématiquement et partiellement, en vue de dessus, un commutateur optique conforme à la présente invention.

Il s'agit d'un commutateur de type "2 vers 1" qui permet de relier optiquement l'une quelconque de deux fibres optique 2 et 4 à une autre fibre optique 6, afin de faire passer de la lumière de l'une des fibres 2 et 4 dans la fibre 6 ou inversement.

Le commutateur optique conforme à l'invention, qui est représenté sur la figure 1, est réalisé à partir de deux substrats semiconducteurs, par exemple en silicium, comme on l'expliquera par la suite.

Sur la figure 1, on voit l'un de ces deux substrats, qui constitue le substrat supérieur et qui porte la référence 8.

On voit également la partie supérieure d'une pièce tournante 10 que comporte ce commutateur et qui est également réalisée à partir des deux substrats.

Cette pièce tournante 10 est électriquement isolée du reste du commutateur et comporte deux prolongements 12 et 14 qui sont diamétralement opposés (la pièce tournante 10 présentant une symétrie de révolution autour de son axe de rotation) et qui sont électriquement reliés l'un à l'autre par l'intermédiaire de la pièce tournante 10 proprement dite.

En effet, le matériau semiconducteur utilisé pour la fabrication du commutateur représenté sur la figure 1 présente une conductivité suffisante pour le fonctionnement de ce commutateur, qui est expliqué par la suite, et l'on a donc une continuité électrique depuis le prolongement 12 jusqu'au prolongement 14 en passant par la pièce tournante 10.

Dans le commutateur représenté sur la figure 1, les prolongements 12 et 14 forment des électrodes mobiles.

Ce commutateur représenté sur la figure 1 comprend également deux électrodes 16 et 18 qui sont fixes et espacées l'une de l'autre et qui sont réalisées à partir du substrat semiconducteur 8.

Ce commutateur de la figure 1 comprend aussi deux autres électrodes 20 et 22 qui sont fixes et espacées l'une de l'autre et qui sont réalisées à partir de ce substrat semiconducteur 8.

Dans l'exemple représenté sur la figure 1, l'électrode 22 est symétrique de l'électrode 16 par rapport à l'axe de rotation de la pièce tournante 10 et l'électrode 20 est symétrique de l'électrode 18 par rapport à cet axe de rotation.

L'électrode mobile 12 se trouve entre les électrodes 16 et 18 et l'électrode 14 se trouve entre les électrodes 20 et 22.

Comme on le voit sur la figure 1, la face supérieure du substrat 8 porte trois guides de lumière 24, 26 et 28 qui sont respectivement associés aux fibres optiques 2, 4 et 6.

De plus, la face supérieure de la pièce tournante 10 porte également deux guides de lumière intermédiaires 30 et 32.

Les guides 24 et 26 se trouvent d'un côté de la pièce tournante et le guide 28 se trouve de l'autre côté de cette pièce tournante 10.

Ces guides, 24, 26 et 28 sont rectilignes et chacun d'entre eux s'arrête, d'un côté, au niveau de l'espace circulaire qui sépare la partie supérieure de la pièce tournante 10 du substrat 8, tandis que de l'autre côté chacun de ces guides 24, 26 et 28 est optiquement raccordé à la fibre optique correspondante.

Les guides 24, 26 et 28 se trouvent sur des droites qui rencontrent l'axe de rotation de la pièce tournante 10.

Les guides 30 et 32 sont courbes et symétriques l'un de l'autre par rapport à un plan contenant cet axe de rotation.

De plus, les extrémités des guides intermédiaires 30 et 32 se trouvent au niveau de l'espace circulaire dont il a déjà été question plus haut.

La courbure des guides intermédiaires 30 et 32 est déterminée de façon que, par rotation de la pièce tournante 10, le commutateur de la figure 1 puisse se trouver dans l'un des deux états suivants :

- un état dans lequel le guide intermédiaire 30 est optiquement relié, d'un côté, au guide 24 et, de l'autre côté, au guide 28, d'où une liaison optique entre les fibres 2 et 6 (le guide intermédiaire 32 n'étant alors relié à aucune fibre), et
- un état dans lequel le guide intermédiaire 32 est optiquement relié, d'un côté, à la fibre optique 4 et, de l'autre côté, à la fibre optique 6, d'où une liaison optique entre ces fibres 4 et 6, le guide intermédiaire 30 n'étant alors relié à aucune fibre optique.

Sur la figure 1, la pièce tournante 10 est représentée dans une position où aucune liaison optique n'est établie et l'électrode mobile 12 est équidistante des électrodes fixes 16 et 18 tandis que l'électrode mobile 14 est équidistante des électrodes fixes 20 et 22.

Avec la position de la pièce tournante 10 que l'on voit sur la figure 1, on remarque que chacune des électrodes mobiles forme le même angle avec les deux électrodes fixes entre lesquelles elle se trouve et que les angles formés par les extrémités des guides intermédiaires avec les guides fixes correspondant (formés sur le substrat 8) sont égaux, tous ces angles étant en fait égaux à une même valeur qui est notée t sur la figure 1.

On voit aussi, sur la figure 1, des moyens 34 prévus pour appliquer une tension électrique soit entre les électrodes 16 et 22 soit entre les électrodes 18 et 20, par l'intermédiaire de fils électriques 36 qui sont issus des moyens 34 et qui aboutissent à des plots de connexions électriques 38 formés sur ces électrodes 16, 18, 20 et 22.

L'un des deux états mentionnés plus haut est sélectionné grâce à une force électrostatique qui est engendrée lorsque cette tension électrique est appliquée.

A titre d'exemple, en partant de la position dans laquelle les électrodes 12 et 14 sont respectivement en contact avec les électrodes 16 et 22, l'application de la tension électrique entre les électrodes 18 et 20 provoque la rotation de la pièce tournante 10 et les électrodes 12 et 14 vont au contact des électrodes 18 et 20, ce qui conduit à l'établissement d'une liaison optique entre les fibres 2 et 6.

Pour revenir à la position précédente, on applique la tension électrique entre les électrodes 16 et 22.

La force électrostatique est proportionnelle à la dérivée, par rapport à l'angle de rotation de la pièce tournante 10, de la quantité suivante :

$$(1/2).C.V^2$$

où C représente la capacité constituée par les électrodes fixes et mobiles et V représente la tension électrique appliquée entre les deux électrodes fixes.

Cette force électrostatique n'a pas à être très grande puisqu'elle n'a à vaincre que les forces de frottement qui peuvent être rendues faibles.

De plus, pour la commutation, on peut utiliser une impulsion d'une tension électrique élevée puisque cette tension n'a pas à être maintenue une fois la commutation réalisée.

Cependant, lorsque cette commutation est réalisée, on peut éventuellement (pour une question de sécurité) garantir le maintien du nouvel état du commutateur en maintenant entre les deux électrodes fixes une faible tension électrique puisque, dans l'exemple de la figure 1, la capacité C est très élevée, étant donné le faible écartement des électrodes fixes adjacentes.

On indique par la suite un procédé de fabrication du commutateur optique qui est représenté en vue de dessus sur la figure 1, sur laquelle seul apparaît l'un des deux substrats utilisés pour la fabrication de ce commutateur.

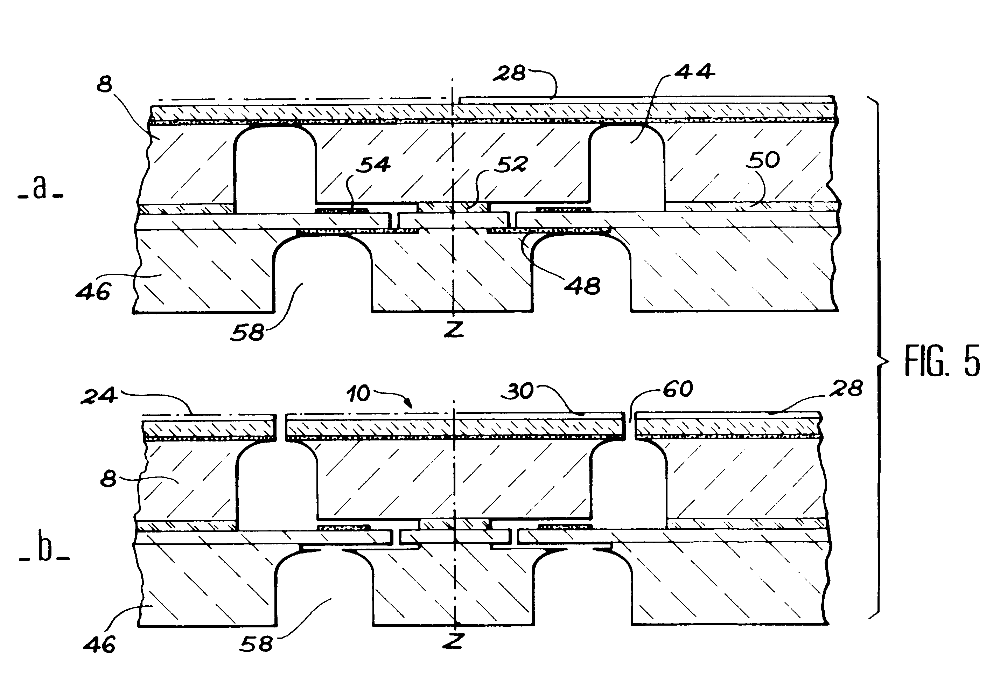

L'autre substrat (substrat inférieur) aapparaît sur la coupe B-B de la figure 1, qui constitue la partie b de la figure 5.

Ce procédé, qui utilise une technologie intégrée, est avantageux en ce qu'il permet d'obtenir, pour les guides de lumière, un support de forte épaisseur, égale à l'épaisseur du substrat 8.

Ceci est important pour le procédé considéré dans lequel les guides de lumière sont classiquement réalisés par dépôt et gravure de couches qui peuvent être en verre, en verre dopé, en oxyde de silicium ou en nitrure de silicium et qui ont une épaisseur importante (plusieurs micromètres).

Ces couches très épaisses sont contraintes.

Il est donc important que leur support soit rigide.

Ce support est le substrat 8 qui, dans l'exemple décrit, est en silicium et a une épaisseur de l'ordre de 0,4 millimètre.

A partir de ce substrat 8, on réalise la partie de la pièce tournante, ou rotor, qui porte les guides de lumière intermédiaires tandis que dans l'autre substrat on réalise le palier de ce rotor.

Dans l'exemple décrit, cet autre substrat est également en silicium et a une épaisseur de l'ordre de 0,4 millimètre.

On explique maintenant le procédé de fabrication du commutateur représenté sur la figure 1.

On commence par traiter le substrat 8 en silicium.

On forme, dans ce substrat 8, une couche 40 de silice dont l'épaisseur est de l'ordre de 300 à 400 nm et qui est enterrée à une profondeur de l'ordre de 30 micromètres à partir de la face supérieure du substrat.

Pour ce faire, on réalise une implantation profonde d'oxygène par le procédé connu SIMOX puis on enterre la couche obtenue 40 à l'aide d'une épitaxie de silicium, jusqu'à obtenir la profondeur souhaitée (30 micromètres dans l'exemple donné).

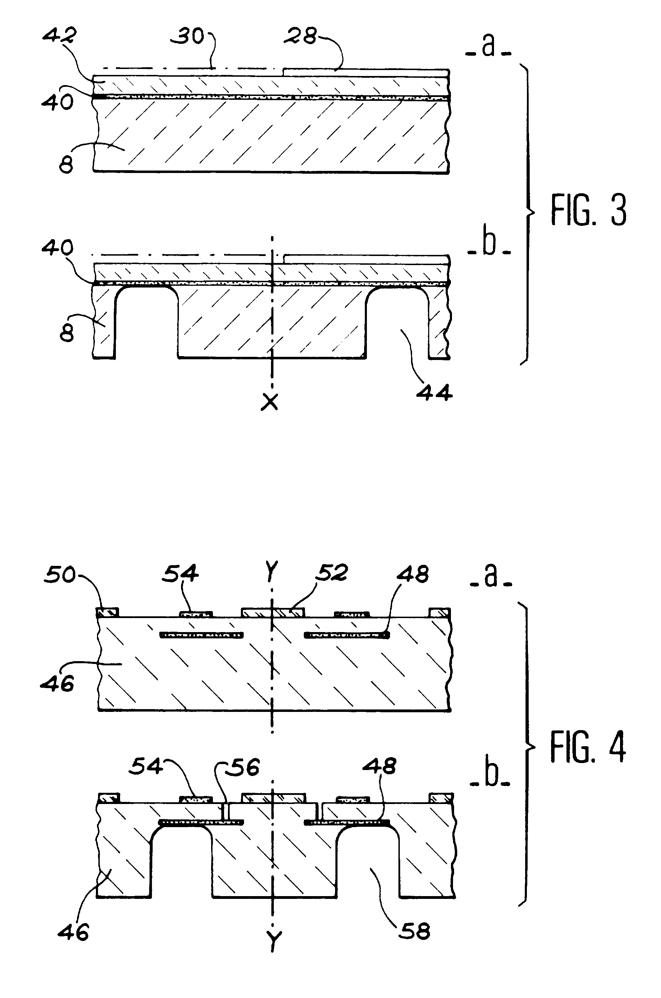

Ceci est illustré par la partie a de la figure 3 où l'on voit la couche 42 de silicium déposée par épitaxie.

Ensuite, on forme les guides de lumière 24, 26, 28, 30 et 32, par dépôt et gravure, à l'aide d'une méthode connue dans le domaine de l'optique intégrée sur silicium.

De préférence, ces guides de lumière ont une hauteur de l'ordre de 5 micromètres et une largeur de 10 micromètres afin de tolérer les jeux mécaniques.

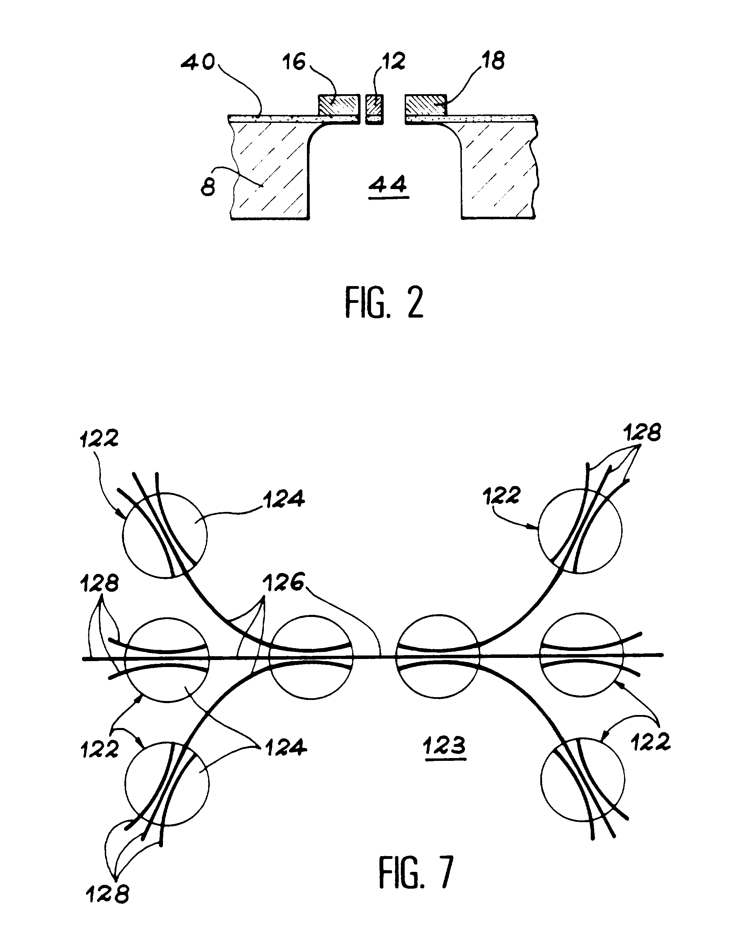

Ensuite, on forme l'évidement 44 que l'on aperçoit sur les figures 1 et 2 et sur la partie b de la figure 3.

Cet évidement 44 a sensiblement la forme d'un tore dont l'axe porte la référence X et qui est muni de deux prolongements symétriques l'un de l'autre par rapport à cet axe.

Ce sont ces prolongements qui s'étendent sous les électrodes mobiles 12 et 14 (voir les figures 1 et 2).

On forme cet évidement 44 par gravure du silicium jusqu'à la couche de silice 40.

On utilise pour ce faire une gravure ionique réactive légèrement anisotrope qui, pour une question de rapidité, est de préférence du type "gravure ionique réactive assistée par hyperfréquence".

On traite ensuite l'autre substrat 46 en silicium (figure 4).

On forme d'abord, dans ce substrat 46, une couche de silice 48 dont l'épaisseur est de l'ordre de 300 à 400 nm et qui est enterrée à une profondeur de l'ordre de 10 micromètres à partir de la face supérieure du substrat 46.

Pour ce faire, on utilise encore une implantation profonde d'oxygène dans ce substrat 46 (procédé SIMOX), suivie d'une épitaxie de silicium jusqu'à obtenir la profondeur voulue de silicium.

Cependant, cette implantation d'oxygène est localisée de manière que la couche 48 ait la forme d'une couronne dont l'axe porte la référence Y (voir la partie a de la figure 4).

Lors de cette implantation localisée, le reste de la face supérieure du substrat est masquée.

Ensuite on dépose, sur toute la face supérieure du substrat 46 ainsi épitaxiée, une couche 50 d'un verre apte à être soudé au silicium, dont l'épaisseur est de l'ordre de 0,5 micromètre.

On utilise par exemple le verre qui est commercialisé par la société Corning sous la référence Corning 7740.

On grave ensuite cette couche de verre 50 de manière à éliminer de celle-ci une partie en forme de couronne dont l'axe est l'axe Y, ce qui laisse subsister un disque 52 de verre dont l'axe est cet axe Y, comme on le voit sur la partie a de la figure 4.

On dépose ensuite, sur toute la face supérieure du substrat 46 qui est revêtue de la couche de verre ainsi gravée, une couche de nitrure de silicium dont l'épaisseur est légèrement inférieure à l'épaisseur de la couche de verre 50.

Ensuite on grave cette couche de nitrure de silicium de manière qu'il ne reste qu'une couche 54 de nitrure de silicium en forme de couronne, qui entoure la couche 52 en forme de disque et dont l'axe est encore l'axe Y.

Cette couche 54 a pour fonction de diminuer les frottements et de maîtriser les jeux mécaniques lorsque le commutateur est fabriqué.

On réalise ensuite, à partir de la face supérieure du substrat 46 et jusqu'à la couche de silice 48, une tranchée circulaire 56 dont l'axe est l'axe Y et qui est comprise entre le disque 52 et la couche 54 en forme de couronne (voir la partie b de la figure 4).

Cette tranchée circulaire 56 est destinée à former l'entrefer de palier de la pièce tournante 10.

Cette tranchée circulaire 56, dont la largeur est de l'ordre de 1 à 2 micromètres, est formée par gravure ionique réactive anisotrope.

On forme ensuite, à partir de la face inférieure du substrat 46 et jusqu'à la couche de silice 48 en forme de couronne, un évidement 58 sensiblement en forme de tore dont l'axe est encore l'axe Y.

Cet évidement 58 est formé par gravure, par la même méthode que celle qui a conduit à l'évidement 44.

Ensuite, on scelle la face arrière du substrat 8 à la face avant du substrat 46, par l'intermédiaire de la couche de verre 50 et du disque de verre 52, de telle manière que les axes X et Y coïncident et constituent alors l'axe de rotation Z de la pièce tournante 10 (partie a de la figure 5).

Le scellement du substrat 8 au substrat 46 est réalisé par un procédé connu, appelé "soudure assistée par champ électrique" ("anodic bonding" dans les articles en langue anglaise ).

La couche de silice 48 en forme de couronne est ensuite éliminée à travers l'évidement 58, par une gravure humide isotrope (voir la partie b de la figure 5).

Ensuite, on forme l'entrefer 60 de la pièce tournante 10, cet entrefer ayant une largeur de 5 micromètres, par gravure ionique anisotrope, et l'on forme en même temps, par une telle gravure, les électrodes 12, 14, 16, 18, 20 et 22 que l'on voit sur les figures 1 et 2.

On relie ensuite les coeurs des fibres optiques 2, 4 et 6 respectivement aux extrémités des guides de lumière 24, 26 et 28.

Enfin, on réalise les diverses connexions électriques (plots 38).

D'autres modes de réalisation du commutateur optique objet de la présente invention sont bien entendu possibles.

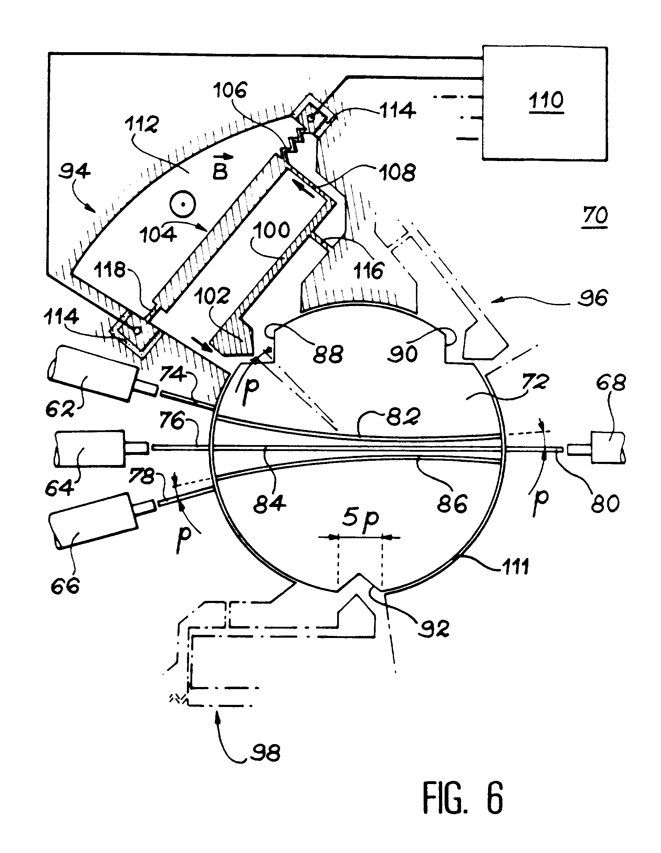

Un autre mode de réalisation particulier est schématiquement et partiellement représenté sur la figure 6.

On remarquera que, dans le cas où le nombre N est supérieur à 2, on ne peut plus utiliser le système simple qui est représenté sur la figure 1 avec des électrodes de moteur perpendiculaires au substrat.

Dans ce cas, on pourrait envisager de réaliser un moteur pas-à-pas avec une succession d'électrodes en arc de cercle autour de la pièce tournante ou parallèles au substrat.

Cette solution, qui permet une avance d'un pas p à chaque impulsion de commande, présente l'inconvénient de ne pas donner d'information sur la position absolue de la pièce tournante.

Le mode de réalisation particulier qui est schématiquement et partiellement représenté sur la figure 6 permet d'aiguiller une fibre optique parmi trois sans ambiguïté.

Plus précisément, le commutateur optique conforme à la présente invention, qui est schématiquement et partiellement représenté sur la figure 6, est destiné à connecter l'une quelconque de trois fibres optiques 62, 64 et 66 à une autre fibre optique 68.

Ce commutateur de la figure 6 est réalisé par un procédé proche de celui qui permet la fabrication du commutateur de la figure 1.

Le commutateur de la figure 6 est encore réalisé à partir de deux substrats semiconducteurs, par exemple en silicium, seul le substrat supérieur 70 étant visible sur la figure 6.

Le commutateur représenté sur cette figure 6 comprend encore une pièce tournante 72 réalisée à partir de ces substrats.

Dans le cas de la figure 6, trois guides de lumière 74, 76 et 78 (au lieu de deux dans le cas de la figure 1) sont formés sur le substrat supérieur 70, d'un côté de la pièce tournante 72.

Ces guides de lumière 74, 76 et 78 sont respectivement reliés aux fibres optiques 62, 64 et 66.

De l'autre côté de la pièce 72, on trouve encore un guide de lumière 80 qui est optiquement relié à la figure optique 68.

La face supérieure de la pièce 72 porte trois guides de lumière intermédiaires 82, 84 et 86 qui sont respectivement associés aux fibres optiques 62, 64 et 66.

Ces guides intermédiaires 82, 84 et 86 sont formés de manière à permettre, par une rotation appropriée de la pièce tournante 72, l'établissement d'une liaison optique entre le guide 80 et l'un quelconque des guides 74, 76 et 78.

Comme on le voit sur la figure 6, la pièce tournante 72 comporte à sa périphérie, trois encoches 88, 90 et 92 à 120° les unes des autres.

Le commutateur de la figure 6 comprend aussi trois moyens d'actionnement 94, 96 et 98 qui sont identiques les uns aux autres et respectivement associés aux encoches 88, 90 et 92, ces moyens d'actionnement étant réalisés à partir du substrat 70.

Chacun de ces moyens d'actionnement comprend :

- un levier 100 à une extrémité duquel est montée une dent 102 qui est prévue pour s'engrener dans l'encoche correspondante,
- une électrode allongée et déformable 104 dont les deux extrémités sont intégrées au substrat supérieur 70 mais électriquement isolées du reste de ce dernier.

On voit sur la figure 6 que cette électrode 104 peut comporter, d'un côté, une partie 106 en forme de zigzag pour plus de souplesse.

Cette électrode 104, qui est reliée par une barrette 108 au levier 100, est prévue pour déplacer, en se déformant, l'autre extrémité du levier 100, provoquant ainsi l'engrènement de la dent 102 dans l'encoche correspondante.

Le commutateur de la figure 6 comprend aussi un moyen magnétique, par exemple un aimant permanent, prévu pour créer un champ magnétique perpendiculaire au substrat supérieur 70, cet aimant étant symbolisé, sur la figure 6, par le champ magnétique B qu'il crée.

Les deux extrémités de chacune des électrodes allongées 104 sont électriquement reliées à des moyens 110 prévus pour appliquer une impulsion de tension électrique entre les deux extrémités de l'une quelconque de ces électrodes allongées 104.

Une impulsion de courant électrique se propage alors dans l'électrode allongée 104 sélectionnée.

Il se produit alors une flexion de cette électrode 104, ce qui pousse la dent 102 associée à cette électrode dans l'encoche correspondante.

Ceci provoque la rotation de la pièce tournante 72 d'une fraction de tour.

Par exemple, en partant de la position représentée sur la figure 6, pour laquelle il a fallu fournir une impulsion de tension au moyen d'actionnement 98, on applique une impulsion de tension entre les deux extrémités de l'électrode allongée du moyen d'actionnement 94.

Alors la dent correspondante pousse l'encoche correspondante puis reprend sa place et la pièce 72 tourne pour établir une liaison optique entre les fibres 66 et 68.

Les moyens d'actionnement peuvent être conçus de façon que, au repos, chaque dent 102 soit engagée dans l'encoche correspondante, de façon que les dents 102 restent toujours en face des encoches.

Ce résultat peut également obtenu en prévoyant deux butées de part et d'autre de chaque encoche.

Le fait qu'il suffise d'une seule impulsion électrique pour réaliser une commutation permet l'utilisation d'un courant électrique élevé (au moins 100 mA) et donc l'obtention d'un déplacement suffisant des dents 102 en direction du centre de la pièce 72, avec un champ magnétique de l'ordre de 0,5 T.

Ce déplacement peut être de l'ordre de 60 micromètres pour un déplacement en rotation $p$ de la pièce tournante 72 de l'ordre de 30 micromètres, ce déplacement $p$ étant compté à la périphérie de la pièce tournante 72.

Il faut que les encoches 88, 90 et 92 soient suffisamment larges pour que les dents correspondantes soient constamment en regard de ces encoches, quelle que soit la position de commutation.

A cet effet, chaque encoche peut avoir, à la périphérie de la pièce tournante 72, une largeur de l'ordre de 5 fois le déplacement $p$.

Le procédé de fabrication du commutateur représenté sur la figure 6, qui est proche du procédé décrit en faisant référence aux figures 1 à 5, comprend d'abord des étapes de traitement du substrat supérieur 70 :

- formation d'une couche enterrée de silice,
- formation des différents guides de lumière,
- formation d'un évidement approprié à partir de la face inférieure du substrat 70.

Cet évidement comporte une partie sensiblement en forme de tore et trois autres parties qui sont disposées à 120° les unes des autres et qui sont raccordées à la partie en forme de tore.

Cette partie en forme de tore est située au-dessous de l'intervalle circulaire 111 que l'on voit sur la figure 6 et qui sépare la pièce tournante 72 du reste du substrat 70.

Les trois autres parties sont situées au-dessous des moyens d'actionnement 94, 96 et 98 et portent la référence 112 sur la figure 6.

Après avoir traité le substrat supérieur 70, on traite l'autre substrat :

- formation d'une couche enterrée de silice en forme de couronne,

- formation d'une couche de verre destinée à la fixation du substrat 70 à cet autre substrat,
- formation d'une couche de nitrure de silicium en forme de couronne,
- formation d'une tranchée circulaire à partir de la face supérieure de l'autre substrat,
- formation d'un évidement torique à partir de la face inférieure de cet autre substrat.

On fixe ensuite cet autre substrat au substrat supérieur 70 ; on élimine la couche enterrée de silice en forme de couronne ; on forme l'intervalle ou palier 111 et, en même temps, les encoches 88, 90 et 92 et les moyens d'actionnement comprenant les leviers 100, les dents 102, les électrodes allongées 104, les parties 106, les barrettes 108 ainsi que les éléments 116 et 118 mentionnés plus loin ; on relie les fibres optiques aux guides de lumière correspondants et l'on réalise les diverses connexions électriques.

Lors de la gravure des moyens d'actionnement, on fait apparaître, pour chacun de ces moyens d'actionnement, deux parties 114 de la couche de silice qui est enterrée dans le substrat supérieur 70.

Ces deux parties 114 sont visibles en vue de dessus sur la figure 6 et les deux extrémités de l'électrode allongée 104 correspondante reposent sur ces deux parties 114 et sont donc électriquement isolées du reste du substrat 70.

Dans l'exemple représenté sur la figure 6 et pour chacun des moyens d'actionnement, la largeur de chacun des éléments qui portent les références 106, 108, 116 et 118 sur la figure 6 est inférieure à 5 micromètres, de façon à obtenir une bonne souplesse en flexion.

L'élément 106 est la partie en forme de zigzag par laquelle un côté de l'électrode allongée 104 est mécaniquement relié au substrat 70.

L'élément 118 est une partie rectiligne (en silicium) par laquelle l'autre côté de cette électrode allongée est mécaniquement relié au substrat 70 comme on le voit sur la figure 6.

L'élément 108 est la barrette qui relie cette électrode allongée au levier 100.

L'élément 116 est une barrette (en silicium) qui va du levier 100 au substrat 70 et autour de laquelle le levier 100 pivote.

A partir d'un commutateur du genre de celui qui est représenté sur la figure 6 et qui est un commutateur de type "3 vers 1", il est possible de construire des commutateurs optiques de type "N vers M".

Ceci est illustré par la figure 7 qui montre en vue de dessus un commutateur optique de type "9 vers 9".

Le commutateur représenté sur la figure 7 est un montage en série et en parallèle de commutateurs optiques élémentaires 122 qui sont réalisés à partir des mêmes substrats et sont du genre de celui qui est représenté sur la figure 6.

Un seul de ces substrats est visible sur la figure 7 et porte la référence 123.

Les pièces tournantes 124 des commutateurs 122 sont identiques les unes aux autres et chacun des guides de lumière qui porte la référence 126 sur cette figure 7 est commun à deux commutateurs élémentaires 122, tandis que les guides de lumière qui portent la référence 128 sont respectivement reliées à des fibres optiques non représentées, les moyens de commande (pour l'application des tensions électriques nécessaires) n'étant pas non plus représentés.

## Revendications

1. Commutateur optique, formé sur un support (8, 46; 70; 123), ce commutateur optique comprenant :

   - un premier ensemble de N guides de lumière d'entrée-sortie (24, 26; 74, 76, 78), N étant un nombre entier au moins égal à 2,
   - un deuxième ensemble de M guides de lumière d'entrée-sortie (28; 80), M étant un nombre entier au moins égal à 1,
   - une pièce tournante (10; 72; 124) qui est mobile en rotation par rapport au support (8, 46; 70; 123) et qui porte des guides de lumière intermédiaires (30, 32; 82, 84, 86), le centre de gravité de la pièce tournante munie des guides de lumière intermédiaires étant sur l'axe de rotation (Z) de cette pièce tournante, ladite pièce tournante étant apte à occuper, par rotation, des positions dans chacune desquelles l'un des guides de lumière intermédiaires relie l'un des N guides de lumière d'entrée-sortie à l'un des M guides de lumière d'entrée-sortie, et
   - des moyens (12, 14, 16, 18, 20, 22; 94, 96, 98, 102) de rotation de la pièce tournante, aptes à faire occuper à celle-ci l'une quelconque des positions, caractérisé en ce que le support comprend un premier substrat (8; 70; 123) et un deuxième substrat (46) plans qui sont superposés et sont fixés l'un à l'autre, en ce que le premier substrat comprend au moins une partie tournante libérée de celui-ci, en ce que le deuxième substrat comprend au moins une partie tournante libérée de celui-ci, ces deux parties tournantes étant superposées et fixées l'une à l'autre et formant la pièce tournante (10; 72; 124), et en ce que l'un des deux substrats (8; 70; 123) et la partie tournante correspondante portent respectivement les guides de lumière d'entrée-sortie et les guides de lumière intermédiaires.

2. Commutateur selon la revendication 1, caractérisé en ce que le nombre N est égal à 2, en ce que le nombre M est égal à 1, en ce que le nombre de guides de lumière intermédiaires (30, 32) est égal à 2, le nombre de positions étant ainsi égal à 2, et en ce que les moyens de rotation de la pièce tournante comprennent :

- un premier groupe de deux électrodes (16, 18) fixes et espacées l'une de l'autre,
- un deuxième groupe de deux électrodes (20, 22) fixes, espacées l'une de l'autre et respectivement opposées aux deux électrodes du premier groupe par rapport à la pièce tournante (10),
- deux électrodes mobiles (12, 14), rigidement solidaires de la pièce tournante, électriquement reliées l'une à l'autre et respectivement placées entre les deux électrodes du premier groupe et entre les deux électrodes du deuxième groupe,

de sorte qu'en appliquant une tension électrique entre deux électrodes opposées, appartenant respectivement aux premier et deuxième groupes, on peut faire passer la pièce tournante d'une position, dans laquelle les électrodes mobiles sont en contact avec les deux autres électrodes opposées, à l'autre position.

3. Commutateur selon la revendication 1, caractérisé en ce que le nombre N est supérieur à 2, en ce que le nombre M est égal à 1, en ce que le nombre de guides de lumière intermédiaires (82, 84, 86) est égal à N, le nombre de positions étant ainsi égal à N, en ce que la pièce tournante (72) comprend, à sa périphérie, N encoches (88, 90, 92) et en ce que les moyens de rotation comprennent :

- des dents (102) qui sont respectivement associées aux encoches et aptes à s'engrener dans celles-ci, et
- des moyens d'actionnement (94, 96, 98) qui sont respectivement associés aux dents, chaque moyen d'actionnement étant prévu pour engrener la dent (102) correspondante dans l'encoche correspondante, amenant ainsi la pièce tournante (72) à l'une des positions, et pour désengrener cette dent de cette encoche.

4. Commutateur selon la revendication 3, caractérisé en ce que chaque moyen d'actionnement (94, 96, 98) comprend :

- un levier (100) à une extrémité duquel est montée la dent (102) correspondante, et
- une électrode allongée et déformable (104), fixée en ses deux extrémités et apte à déplacer, en se déformant, l'autre extrémité du levier (100), causant ainsi l'engrènement de la dent correspondante dans l'encoche correspondante,

et en ce que les moyens de rotation comprennent en outre des moyens de création d'un champ magnétique (B) perpendiculaire aux électrodes allongées (104), de sorte qu'en appliquant une tension électrique entre les extrémités de l'une de ces électrodes allongées, celle-ci subit une déformation.

5. Procédé de fabrication du commutateur optique selon l'une quelconque des revendications 1 à 4, caractérisé en ce qu'il comprend les étapes suivantes :

- fabrication des N guides de lumière d'entrée-sortie (24, 26; 74, 76, 78), des M guides de lumière d'entrée-sortie (28; 80) et des guides de lumière intermédiaires (30, 32; 82, 84, 86) sur l'une des faces d'un premier substrat semiconducteur (8; 46), cette face étant appelée face-avant du premier substrat,
- formation d'un évidement (44; 112) dans ce premier substrat, à partir de l'autre face de celui-ci, appelée face-arrière du premier substrat, cet évidement délimitant une première partie de la pièce tournante (10; 72), les guides de lumière intermédiaires se trouvant sur cette première partie,
- formation d'un évidement torique (58) dans un deuxième substrat semiconducteur (46), à partir d'une face de celui-ci qui est appelée face-arrière du deuxième substrat, cet évidement torique délimitant une deuxième partie de la pièce tournante,
- fixation de l'autre face du deuxième substrat, qui est appelée face-avant du deuxième substrat, à la face-arrière du premier substrat et de façon à fixer la première partie de la pièce tournante à la deuxième partie de celle-ci, et
- libération de la pièce tournante (10; 72) du reste des premier et deuxième substrats.

6. Procédé selon la revendication 5, caractérisé en ce que les substrats (8; 46) sont en silicium et sont fixés l'un à l'autre au moyen d'un verre soudable au silicium.

7. Procédé selon l'une quelconque des revendications 5 et 6, caractérisé en ce que les substrats (8; 46) sont en silicium, en ce que l'on forme dans le deuxième substrat (46), à partir de la face supérieure de celui-ci, une couche enterrée d'oxyde de silicium (48), en forme de couronne, dont l'axe (Y) correspond à l'axe de rotation de la pièce tournante (10), en ce que l'on réalise une gravure circulaire, autour de cet axe, & partir de la face supérieure du deuxième substrat, jusqu'à cette couche enterrée, et en ce que, après fixation des substrats (8; 46) l'un à l'autre, cette couche enterrée (48) est éliminée à travers l'évidement torique (58), ce dernier étant formé dans le deuxième substrat (46) jusqu'à cette couche enterrée, ce qui libère la partie correspondante de la pièce tournante.

**Patentansprüche**

1. Optischer Schalter, gebildet auf einem Träger (8, 46; 70; 123), wobei dieser Schalter umfaßt:

   - einen ersten Satz von N Eintritts-Austrittslichtleitern (24, 26; 74, 76, 78), wobei N eine ganze Zahl wenigstens gleich 2 ist,
   - einen zweiten Satz von M Eintritts-Austrittslichtleitern (28; 80), wobei M eine ganze Zahl wenigstens gleich 1 ist,
   - ein Drehstück (10; 72; 124), drehbar bezüglich des Trägers (8, 46; 70; 123), das Zwischenlichtleiter (30, 32; 82, 84, 86) trägt, wobei der Schwerpunkt des mit den Zwischenlichtleitern ausgestatteten Drehstücks in der Rotationsachse (Z) dieses Drehstücks liegt und besagtes Drehstück imstande ist, durch Drehung Stellungen einzunehmen, derart, daß in jeder von diesen einer der Zwischenlichtleiter einen der N Eintritts-Austrittslichtleiter mit einem der M Eintritts-Austrittslichtleiter verbindet, und
   - Rotationseinrichtungen (12, 14, 16, 18, 20, 22; 94, 96, 98, 102) des Drehstücks, fähig dieses irgendeine der Stellungen einnehmen zu lassen,

   **dadurch gekennzeichnet**,
   daß der Träger ein erstes Substrat (8; 70; 123) und ein zweites Substrat (46) umfaßt, die eben, übereinanderliegend und aneinander befestigt sind, daß das erste Substrat wenigstens einen drehbaren Teil umfaßt, freigemacht von diesem, daß das zweite Substrat wenigsten einen drehbaren Teil umfaßt, freigemacht von diesem, wobei diese beiden drehbaren Teile übereinanderliegend und aneinander befestigt sind und das Drehstück bilden (10; 72; 124), und dadurch, daß eines der beiden Substrate (8; 70; 123) und der entsprechende drehbare Teil jeweils die Eintritts-Austrittslichtleiter und die Zwischenlichtleiter tragen.

2. Schalter nach Anspruch 1, dadurch gekennzeichnet, daß die Zahl N gleich 2 ist, daß die Zahl M gleich 1 ist, daß die Anzahl Zwischenlichtleiter (30, 32) gleich 2 ist, wobei die Anzahl Stellungen also gleich 2 ist, und dadurch, daß die Rotationseinrichtungen des Drehstücks umfassen:

   - eine erste Gruppe von zwei Elektroden (16, 18), fest und voneinander beabstandet,
   - eine zweite Gruppe von zwei Elektroden (20, 22), fest, voneinander beabstandet und jeweils entgegengesetzt zu den beiden Elektroden der ersten Gruppe in bezug auf das Drehstück (10),
   - zwei bewegliche Elektroden (12, 14), starr mit dem Drehstück verbunden, elektrisch miteinander verbunden und jeweils angeordnet zwischen den beiden Elektroden der ersten Gruppe und zwischen den beiden Elektroden der zweiten Gruppe,
   derart daß, durch das Anlegen einer elektrischen Spannung zwischen zwei entgegengesetzten, zur ersten beziehungsweise zweiten Gruppe gehörenden Elektroden, man das Drehstück aus einer Stellung, in der die beweglichen Elektroden in Kontakt sind mit den beiden anderen, entgegengesetzten Elektroden, übergehen lassen kann in die andere Stellung.

3. Schalter nach Anspruch 1, dadurch gekennzeichnet, daß die Zahl N größer ist als 2, daß die Zahl M gleich 1 ist, daß die Anzahl der Zwischenlichtleiter (82, 84, 86) gleich N ist, die Anzahl Stellungen also gleich N ist, daß das Drehstück (72) an seinem Umfang N Kerben (88, 90, 92) aufweist und daß die Rotationseinrichtungen umfassen:

   - Zähne (102), jeweils den Kerben zugeordnet und imstande, in diese einzugreifen, und
   - Betätigungseinrichtungen (94, 96, 98), jeweils mit den Zähnen verbunden, wobei jede Betätigungseinrichtung vorgesehen ist, um den entsprechenden Zahn (102) in die entsprechende Kerbe einzurücken und somit das Drehstück in eine der Stellungen zu bringen, und um diesen Zahn wieder auszurücken.

4. Schalter nach Anspruch 3, dadurch gekennzeichnet, daß jede Betätigungseinrichtung (94, 96, 98) umfaßt:

   - einen Hebel (100), an dessen einem Ende der entsprechende Zahn (102) befestigt ist, und
   - eine längliche und verformbare Elektrode (104), an ihren beiden Enden festgemacht und imstande, indem sie sich verformt, das andere Ende des Hebels (100) zu verschieben, was zum Einrücken des entsprechenden Zahns in die entsprechende Kerbe führt,

   und dadurch, daß die Rotationseinrichtungen außerdem Einrichtungen zur Erzeugung eines Magnetfelds (B) senkrecht zu den länglichen Elektroden (104) umfassen, so daß, beim Anlegen einer elektrischen Spannung zwischen den Enden von einer dieser länglichen Elektroden, diese sich verformt.

5. Verfahren zur Herstellung des optischen Schalters nach einem der Ansprüche 1 bis 4, dadurch gekennzeichnet, daß es die folgenden Schritte umfaßt:

- Herstellung der N Eintritts-Austrittslichtleiter (24, 26; 74, 76, 78), der M Eintritts-Austrittslichtleiter (28; 80) und der Zwischenlichtleiter (30, 32; 82, 84, 86) auf einer der Seiten eines ersten Halbleitersubstrats (8; 46), wobei diese Seite Vorderseite des ersten Substrats genannt wird,
- Bilden einer Vertiefung (44; 112) in diesem.ersten Substrat, ausgehend von dessen anderer Seite, Rückseite des ersten Substrats genannt, wobei diese Vertiefung einen ersten Teil des Drehstücks (10; 72) begrenzt und die Zwischenlichtleiter sich in diesem ersten Teil befinden,
- Bilden einer torischen Vertiefung (58) in einem zweiten Halbleitersubstrat (46), ausgehend von eine Seite von diesem, die Rückseite des zweiten Substrats genannt wird, wobei diese torische Vertiefung einen zweiten Teil des Drehstücks begrenzt,
- Befestigen der anderen Seite des zweiten Substrats, die Vorderseite des zweiten Substrats genannt wird, an der Rückseite des ersten Substrats derart, daß dabei der erste Teil des Drehstücks an dessen zweitem Teil befestigt wird, und
- Freimachen des Drehstücks (10; 72) vom Rest des ersten und zweiten Substrats.

6. Verfahren nach Anspruch 5, dadurch gekennzeichnet, daß die Substrate (8; 46) aus Silicium sind und aneinander befestigt sind durch ein mit Silicium verschweißbares Glas.

7. Verfahren nach einem der Ansprüche 5 und 6, dadurch gekennzeichnet, daß die Substrate (8; 46) aus Silicium sind, daß man in dem zweiten Substrat (46), ausgehend von dessen Oberseite, eine vergrabene Siliciumoxidschicht (48) bildet, kranz- bzw. ringförmig, deren Achse (Y) der Rotationsachse des Drehstücks (10) entspricht, daß man eine kreisförmige Ätzung durchführt, um diese Achse herum, ausgehend von der Oberseite des zweiten Substrats, bis zu dieser vergrabenen Schicht, daß nach Befestigung der Substrate (8; 46) aneinander diese vergrabene Schicht (48) entfernt wird durch die torische Vertiefung (58), wobei diese letztere in dem zweiten Substrat (46) gebildet wird bis zu dieser vergrabenen Schicht, was den entsprechenden Teil des Drehstücks freimacht.

**Claims**

1. Optical switch formed on a support (8, 46, 70, 123), said elementary optical switch comprising a first array of N input-output light guides (24, 26, 74, 76, 78), N being an integer at least equal to 2, a second array of M input-output light guides (28, 80), M being an integer at least equal to 1, a rotary part (10, 72, 124) rotatable with respect to the support (18, 46, 70, 123) and which carries intermediate light guides (30, 32, 82, 84, 86), the centre of gravity of the rotary part provided with the intermediate light guides being on the rotation axis (Z) of said rotary part, which is able to occupy, by rotation, positions in each of which one of the intermediate light guides connects one of the N input-output light guides to one of the M input-output light guides and means (12, 14, 16, 18, 20, 22, 94, 96, 98, 102) for rotating the rotary part, able to make the latter occupy any random one of the positions, characterized in that the support comprises a first substrate (8, 70, 123) and a second substrate (46) in planar form, which are superimposed and which are fixed to one another, the first substrate comprising at least one rotary portion released therefrom, the second substrate comprising at least one rotary portion released therefrom, said two rotary portions being superimposed and fixed to one another so as to form the rotary part (10, 72, 124) and one of the two substrates (8, 70, 123) and the corresponding rotary portion respectively carry the input-output light guides and the intermediate light guides.

2. Switch according to claim 1, characterized in that the number N is equal to 2, the number M is equal to 1, the number of intermediate light guides (30, 32) is equal to 2, so that the number of positions is equal to 2 and the rotating means of the rotary part comprise a first group of two fixed, spaced electrodes (16, 18), a second group of two fixed, spaced electrodes (20, 22) and which are respectively opposite to the two electrodes of the first group with respect to the rotary part (10), two mobile electrodes (12, 14) rigidly integral with the rotary part and electrically interconnected and respectively placed between the two electrodes of the first group and between the two electrodes of the second group, so that they apply a voltage between two opposite electrodes respectively belonging to the first and second groups and it is possible to pass the rotary part from a position in which the mobile electrodes are in contact with the two other opposite electrodes to the other position.

3. Switch according to claim 1, characterized in that the number M is equal to 1, the number of intermediate light guides (82, 84, 86) is equal to N, so that the number of positions is equal to N, the rotary part (72) comprising on its periphery N slots (88, 90, 92) and rotation means comprising teeth (102) respectively associated with the slots and able to engage therein and actuating means (94, 96, 98) respectively associated with the teeth, each actuating means engaging the corresponding tooth (102) in the corresponding slot, thus bringing the rotary part (72) to one of its positions and for disengaging said tooth from said slot.

4. Switch according to claim 3, characterized in that each actuating means (94, 96, 98) comprises a lever (100) at one end of which is fitted the corresponding tooth (102) and an elongated, deformable electrode (104) fixed at its two ends and able to move, accompanied by deformation, the other end of the lever (100), thus causing the engagement of the corresponding tooth in the corresponding slot and the rotation means also means for creating a magnetic field (B) perpendicular to the elongated electrodes (104), so that by applying a voltage between the ends of one of the elongated electrodes, the latter undergoes a deformation.

5. Process for the production of the optical switch according to claim 1, characterized in that it comprises the following stages: production of N input-output light guides (24, 26, 74, 76, 78), M input-output light guides (28, 80) and intermediate light guides (30, 32, 82, 84, 86) on one of the faces of a first semiconductor substrate (8, 46), said face being called the front face of the first substrate, formation of a recess (44, 112) in said first substrate from the other face thereof and called the rear face of the first substrate, said recess defining a first portion of the rotary part (10, 72), the intermediate light guides being located on said first portion, formation of a toroidal recess (58) in a second semiconductor substrate (46), from one face thereof called the rear face of the second substrate, said toroidal recess defining a second portion of the rotary part, fixing the other face of the second substrate, called the front face of the second substrate, to the rear face of the first substrate, so as to fix the first portion of the rotary part to its second portion and release of the rotary part (10, 72) from the remainder of the first and second substrates.

6. Process according to claim 5, characterized in that the substrates (8, 46) are made from silicon and are fixed to one another by means of a silicon-fusible glass.

7. Process according to claim 5, characterized in that the substrates (8, 46) are of silicon, in the second substrate (46) is formed from the upper face thereof a buried silicon dioxide layer (48) in the form of a ring, whose axis (Y) corresponds to the rotation axis of the rotary part (10), circular etching takes place around said axis from the upper face of the second substrate and up to said buried layer and, after fixing the substrates (8, 46) to one another, said buried layer (48) is eliminated across the toroidal recess (58), the latter being formed in the second substrate (46) up to said buried layer, which frees the corresponding portion of the rotary part.

FIG. 1

FIG. 2

FIG. 7

FIG. 3

FIG. 4

FIG. 5

FIG. 6